Europäisches Patentamt

European Patent Office

Office européen des brevets

(11) Publication number: **0 548 679 A1**

# EUROPEAN PATENT APPLICATION

(21) Application number: **92121013.4**

(22) Date of filing: **09.12.92**

(51) Int. Cl.⁵: **C01B 3/40**

(30) Priority: **20.12.91 JP 339027/91**

(43) Date of publication of application:
**30.06.93 Bulletin 93/26**

(84) Designated Contracting States:
**DE DK FR GB IT NL**

(71) Applicant: **IDEMITSU KOSAN COMPANY LIMITED**
**1-1, Marunouchi 3-chome Chiyoda-ku Tokyo 100(JP)**

(72) Inventor: **Matsumoto, Hiroto, c/o Idemitsu**
Kosan Company Ltd.
1280, Kamiizumi
Sodegaura-shi, Chiba-ken 299-02(JP)
Inventor: Hayasaka, Toshiaki c/o Idemitsu
Kosan Company Ltd.
1280, Kamiizumi
Sodegaura-shi, Chiba-ken 299-02(JP)

(74) Representative: **TER MEER - MÜLLER - STEINMEISTER & PARTNER**
**Mauerkircherstrasse 45**
**W-8000 München 80 (DE)**

(54) **Process for the preparation of synthetic gases.**

(57) Synthetic gases are prepared from methane and oxygen in the presence of a catalyst containing ruthenium and/or rhodium as an active ingredient and, as needed, cobalt and/or manganese as a promoter, deposited on zirconia and/or stabilized zirconia. The process for the preparation of the synthetic gases can provide carbon monoxide and hydrogen at higher rates of selectivity and produce a lesser amount of by-products, at lower costs and with high efficiency. The process little causes pollution.

F I G . 1

The present invention relates to a process for the preparation of synthetic gases and, more particulaly cularly, to a process for the preparation of synthetic gases suitable as a raw material for the synthesis of methanol and the like.

Generally, synthetic gases containing hydrogen and carbon monoxide can suitably be employed as a raw gas for use in the synthesis reaction, such as methanol synthesis, oxo synthesis, Fischer-Tropsch synthesis, and the like.

Recently, a process for the preparation of synthetic gases has been found which can produce the synthetic gases at low costs and with high efficiency yet carbon dioxide at a low rate and which may cause only a low extent of pollution. This process involves preparing the synthetic gases by using methane and oxygen as raw materials in the presence of a catalyst under the following reaction scheme:

$$CH_4 + 1/2O_2 \rightarrow CO + 2H_2$$

This process, however, presents the drawback that the resulting synthetic gases are likely to be contaminated with by-products such as carbon dioxide or water.

Hence, a variety of improvements has been made with the attempt to provide a process for the preparation of the synthetic gases, which can allow methane to react with oxygen at a higher rate of selectivity and produce carbon monoxide at a higher yield yet by-products at a lower rate, than conventional processes.

For instance, U.S. DOE REPORT (No. DOE-MC-6024, 1985, page 348) discloses a process for selectively forming carbon monoxide by carrying out the aforesaid reaction on a fluidized bed. This process, however, is carried out at temperatures as high as 900°C or higher, so that it suffers from the disadvantages that the catalyst is likely to sinter and the life of the catalyst becomes short. Further, this process raises costs of equipment because a material that can withstand high temperatures should be employed for a reactor and it is less economical because an oven should be heated at high temperatures. In addition, this process restricts the type of reaction to be applied because the use of the fluidised bed is essential.

Alternatively, Ashcroft et al. at Oxford University disclose catalysts suitable for the preparation of the synthetic gases, which are prepared by depositing nickel, platinum, ruthenium, rhodium or the like on a carrier such as an alumina (Nature; vol. 344, 22 March, 1990). The process for the preparation of the synthetic gases in the presence of such a catalyst produces carbon dioxide as a by-product so that the catalyst involved is still insufficient in terms of a rate of selectivity into carbon monoxide.

Furthermore, Uchijima et al. at Tsukuba University proposes a process which uses a catalyst prepared by depositing a metal belonging to Group VIII of the Periodic Table on a carrier (Catalyst; vol. 33, page 98, 1991). Their article reports to the effect that the use of a catalyst prepared by depositing rubidium, ruthenium or nickel on a silica carrier can achieve a nearly 100% rate of selectivity into carbon monoxide at a temperature as high as 700°C . Hence, this process can be said to raise a rate of selectivity into carbon monoxide at high temperatures yet it is still insufficient in terms of a rate of selectivity into carbon monoxide at temperatures of 650 °C or lower, and it suffers from the disadvantage that a rate of conversion from methane is still low.

The present invention has been achieved in order to solve the problems which are presented by the conventional processes and by the catalysts as have been proposed as the catalysts to be employed for the process for the preparation of the synthetic gases.

Therefore, the object of the present invention is to provide a process for the preparation of synthetic gases which can achieve a high rate of selectivity into carbon monoxide and hydrogen and produce the synthetic gases containing a less rate of by-products at cheap costs and with high efficiency and which forms carbon dioxide at a considerably low rate so that it is extremely low in causing pollution.

In order to achieve the aforesaid object, an aspect of the present invention consists of a process for the preparation of synthetic gases, which is characterized in that the synthetic gases are prepared by reacting methane with oxygen in the presence of a catalyst prepared by depositing at least an active ingredient selected from the group consisting of ruthenium and rhodium on at least a carrier selected from the group consisting of zirconia and stabilized zirconia.

Another aspect of the present invention consists of a process for the preparation of synthetic gases, which is characterized in that the synthetic gases are prepared by reacting methane with oxygen in the presence of a catalyst prepared by depositing at least an active ingredient selected from the group consisting of ruthenium and rhodium and at least a member selected from the group consisting of cobalt and manganese on at least a carrier selected from the group consisting of zirconia and stabilized zirconia.

2

Other objects, features and advantages of the present invention will become apparent in the course of the description of the preferred embodiments, which follows, with reference to the accompanying drawings.

Fig. 1 is a graph showing a rate of conversion from methane in examples of the process according to the present invention, as compared with a comparative example.

Fig. 2 is a graph showing a rate of selectivity into carbon monoxide in the examples of the process according to the present invention, as compared with a comparative example.

Catalyst:

Ingredient of the catalyst:

An aspect of the catalyst to be employed in the process according to the present invention contains at least one active ingredient selected from the group consisting of ruthenium and rhodium deposited on at least one carrier selected from the group consisting of zirconia and stabilized zirconia.

Another aspect of the catalyst to be employed in the process according to the present invention contains at least one active ingredient selected from the group consisting of ruthenium and rhodium and at least one promoter selected from the group consisting of cobalt and manganese deposited on at least one carrier selected from the group consisting of zirconia and stabilized zirconia.

The carrier to be employed for the process according to the present invention may include, for example, zirconia and stabilized zirconia. The carrier may be employed singly or in combination of two.

It can be noted herein that the stabilized zirconia may be prepared by modifying and stabilizing a portion or a whole portion of zirconia with a stabilizing agent.

When the zirconia is employed as the carrier, the excellent characteristics inherent in the zirconia itself can be demonstrated in such a manner that reactivity with water is particularly so high that the reaction for the preparation of the synthetic gases can be facilitated, thereby suppressing carbon resulting during the reaction from depositing on the catalyst.

On the other hand, when the stabilized zirconia is employed as the carrier, resistance to heat, stability and mechanical strength can be further improved due to the employment of the stabilizing agent, in addition to the excellent characteristics inherent in the zirconia itself, which can be demonstrated in such a manner that reactivity with water is particularly so high that the reaction for the preparation of the synthetic gases can be facilitated and that carbon resulting during the reaction is suppressed from depositing on the catalyst.

Further, it can be noted that, even if the stabilized zirconia is employed at temperatures of higher than $500\,^{\circ}C$, it can function as a catalyst in a stable manner because the stabilized zirconia causes a small degree of a decrease in a surface area.

It is also to be noted that the carrier may contain a metal oxide as a carrier ingredient, in addition to the zirconia and/or the stabilized zirconia, as long as such a carrier ingredient does not cause any adverse influence upon the objects of the present invention.

There is no limitation upon a shape of the carrier and the carrier may be in any form, such as in a form of finely pulverized powder, bead, pellet, plate, membrane, monolith or so on.

As the active ingredient, there may be employed rhodium and ruthenium, and they are employed singly or in combination of two.

The rate of the active ingredient to be deposited on the carrier may range usually from 0.05% to 3.0% by weight, preferably from 0.1% to 2.0% by weight.

When the active ingredient is contained at the rate with respect to the weight of the carrier in the range as described hereinabove, carbon monoxide and hydrogen can be prepared at a high rate of selectivity and the life of the catalyst can be maintained for a period of time. Further, such a high rate of selectivity cannot be maintained, if the rate of the active ingredient in the catalyst would be less than the lower range limit, on the one hand, and the catalyst is less economical because costs of the catalyst become too high to comply with improvements in the catalytic activity, if the rate of the active ingredient would be more than the upper range limit, on the other hand.

The catalyst to be employed for the process according to the present invention may additionally contain cobalt or manganese as a promoter, and the promoter may be employed singly or in combination of two.

The rate of the promoter to be deposited on the carrier may range usually from 0.1% to 10.0% by weight, preferably from 0.5% to 5.0% by weight. When the rate of the promoter is within the range as defined hereinabove, on the one hand, the catalyst can maintain its highly catalytic activity and prolong its catalytic life. When the rate of the promoter is outside the range as defined hereinabove, on the other hand, there is the risk that the catalyst may not act effectively because the active ingredient such as ruthenium and/or rhodium may be covered with the promoter.

It can further be noted that the shape of the catalyst to be employed for the process according to the present invention is not restricted to a particular one.

Preparation of the catalyst:

In accordance with the present invention, the catalyst may be prepared from the carrier or a raw material for the carrier and the active ingredient or a raw material for the active ingredient or from the carrier or the raw material for the carrier, the catalyst or the raw material for the catalyst, and the promoter or a raw material for the promoter by using a conventional procedure for the preparation of catalysts, such as impregnation, immersion, wet adsorption, dry absorption, CVD method, solvent evaporation, dry mixing method, wet mixing method, spray wetting method, or the like, or a combination of these procedures, or by a conventional procedure for the deposition of active ingredients on carriers, such as standing method, stirring method, solution flowing method, solvent refluxing method, or the like.

As the raw material for the carrier, there may be employed, for example, zirconium oxide, a zirconium compound capable of being converted into zirconium oxide at the time of the preparation of the catalyst or at the time of the preparation of the synthetic gases, stabilized zirconium oxide, or a mixture of zirconium oxide with a stabilizer capable of converting the zirconium oxide into the stabilized zirconia at the time of the preparation of the catalyst or at the time of the preparation of the synthetic gases.

As the zirconium compound capable of being converted into the zirconium oxide, there may be employed, for example, zirconium hydroxide, a zirconium halide, zirconium nitrate, zirconyl nitrate, zirconium acetate, zirconium oxalate, a zirconium alkoxide, zirconium oxychloride, an organic zirconium compound, or the like. When a salt among these compounds would be sparingly soluble, an acid or other compounds may be added as needed in order to solubilize it.

As the stabilizer capable of converting the zirconium oxide into the stabilized zirconia, there may be employed, for example, yttrium oxide, lanthanum oxide, magnesium oxide, cerium oxide, or any other oxide that is conventionally employed for stabilizing zirconia in a variety of fields of materials. Among these stabilizers, particularly yttrium oxide, magnesium oxide and cerium oxide are preferably employed.

Further, it can be noted that, in place of the yttrium oxide, there may be employed a substance capable of being converted into yttrium oxide at the time of the preparation of the catalyst or at the time of the preparation of the synthetic gases.

As the substance capable of being convered into yttrium oxide, there may be employed, for example, yttrium hydroxide, an yttrium halide, an yttrium oxyhalide, yttrium nitrate, yttrium carbonate, yttrium acetate, yttrium oxalate, or an yttrium alkoxide, such as yttrium trimethoxide, yttrium triethoxide, yttrium tripropoxide, yttrium triisopropoxide, yttrium tributoxide, or the like. Among the substances, particularly the yttrium alkoxide can preferably be employed.

Further, the magnesium oxide can be replaced with a substance capable of being converted into magnesium oxide at the time of the preparation of the catalyst or at the time of the preparation of the synthetic gases.

As the substance capable of ing converted into magnesium oxide, there may be employed, for example, magnesium hydroxide, a magnesium halide, a magnesium oxyhalide, magnesium nitrate, magnesium carbonate, magnesium acetate, magnesium oxalate, a magnesium alkoxide such as magnesium methoxide, magnesium ethoxide, magnesium propoxide, magnesium isopropoxide or magnesium butoxide, or the like. Among these substances, the magnesium alkoxide can be preferably employed.

In place of the cerium oxide, there may be employed a substance capable of being converted into cerium oxide at the time of the preparation of the catalyst or at the time of the preparation of the synthetic gases.

As the substance capable of being converted into cerium oxide, there may be employed, for example, cerium hydroxide, a cerium halide, a cerium oxyhalide, cerium nitrate, cerium carbonate, cerium acetate, cerium oxalate, a cerium alkoxide such as cerium methoxide, cerium ethoxide, cerium propoxide, cerium isopropoxide or cerium butoxide, or the like. Among these substances, the cerium alkoxide may be preferably employed.

When the compounds illustrated hereinabove are sparingly soluble, an alcohol or an acid may be employed as needed to solubilize them.

As the stabilizers, the compounds as illustrated hereinabove may be employed singly or in combination of two or more.

The active ingredient includes rhodium and ruthenium. As the raw material of rhodium, there may be mentioned, for example, a rhodium halide such as rhodium chloride or the like; a halogenated rhodinate

4

such as sodium chlororhodinate, ammoniumchlororhodinate or the like; a halogenated rhodinic acidsuch as chlororhodinic acid or the like; a rhodiumhydroxide such as rhodium (III) hydroxide, rhodium (IV) hydroxide or the like; rhodium nitrate; rhodium oxide; or an organic rhodium compound such as rhodium carbonyl or the like. As the raw material of ruthenium, there may be mentioned, for example, a ruthenium halide such as ruthenium iodide, ruthenium chloride or the like; a halogenated ruthenate such as ammonium chlororuthenate or the like; a halogenated ruthenic acid such as chloro- ruthenic acid or the like; ruthenium hydroxide; aruthenium oxide such as ruthenium dioxide, ruthenium tetroxide or the like; a ruthenate such as potassium ruthenate or the like; or an organic ruthenium compound such as ruthenium carbonyl or the like. Among these raw materials for the active ingredients of the catalysts, ruthenium trichloride is preferably employed.

Furthermore, these raw materials for the active ingredients of the catalysts may be employed singly or in combination of two or more.

The promoter for the catalysts includes cobalt and manganese. As the raw materials for the promoters, there may be employed, for example, sulfates, nitrates, carbonates, acetates, hydroxides, oxides, basic salts, alkoxides and organic compounds of the metals.

More specifically, the raw materials for cobalt may include, for example, cobalt chloride, cobalt nitrate, cobalt sulfate, cobalt acetate, cobalt formate, cobalt oxalate, cobalt hydroxide, cobalt oxide, cobalt carbonate (basic cobalt carbonate), cobalt (II) acetylacetonate, cobalt (III) acetylacetonate and the like. Further, anhydrides or hydrates of these compounds may be employed. Among these cobalt compounds, cobalt nitrate is particularly preferred.

In addition, the raw materials for magnesium may include, for example, magnesium chloride, magnesium nitrate, magnesium sulfate, magnesium acetate, magnesium formate, magnesium oxalate, magnesium hydroxide, magnesium oxide, magnesium carbonate (basic magnesium carbonate), magnesium (II) acetylacetonate, magnesium (III) acetylacetonate and the like. Furthermore, anhydrides or hydrates of these compounds may be employed. Among these magnesium compounds, magnesium nitrate is particularly preferred.

The promoters for the catalysts may be employed singly or in combination of two or more.

Preparation of synthetic gases:

The process according to the present invention involves reacting gases of raw materials in the presence of a particular catalyst.

The gases to be employed as the raw materials in the process for the preparation of the synthetic gases comprise methane gas and oxygen gas. It should be noted herein, however, that the gases are not restricted to a mixture of the gases comprising of methane gas and oxygen gas and that they may contain a mixture of methane-containing gases with oxygen-containing gases. Further, gases containing vapor or carbon dioxide may be employed for adjusting the composition of the resulting synthetic gases consisting of hydrogen and carbon monoxide.

The methane gas may include, for example, highly purified methane and the like. The methane-containing gases are not restricted to particular ones and they may include, for example, city gases, natural gases and the like.

As the oxygen gas, there may be employed, for example, oxygen gas obtainable by the separation from nitrogen by means of PSA (Pressure Swing Absorbent) method or the like. The oxygen-containing gases are not restricted to particular ones and they may include, for example, air, dried air and the like.

A molal ratio of methane to oxygen within the gases to be employed as the raw materials may range usually from 1.3 to 2.2, preferably from 1.5 to 2.0.

If the molal ratio of methane to oxygen would exceed the 2.2-to-1 ratio, the amount of the methane becomes so large that carbon becomes likely to settle. On the other hand, if the molal ratio of methane to oxygen would become smaller than the 1.3-to-1 ratio, the amount of the oxygen is rendered so excessive that carbon monoxide is oxidized rather than carbon dioxide, thereby resulting in a decrease in a rate of selectivity into carbon monoxide in the synthetic gases produced.

The reaction pressure may usually be approximately 300 $kg/cm^2G$ or lower, preferably approximately 50 $kg/cm^2G$ or smaller. If the reaction pressure would become larger than 300 $kg/cm^2G$, high temperatures are required for carrying out the reaction.

The reaction temperature may range usually from approximately 350 °C to 1,200 °C, preferably from approximately 450 °C to 900 °C. If the reaction temperature would become lower than 350 °C, on the one hand, the catalytic activity of the catalyst is reduced to a great extent. If the reaction temperature would become higher than 1,200 °C, on the other hand, the reactor should be made of a material that can withstand such high temperatures, so that it is not practical.

The type of reaction may be a continuous type or a batch type, although the reaction of the continuous type is preferred. In the reaction of the continuous type, methane and oxygen to be employed as the gases of the raw materials may be fed at a GHSV in the range of usually from 1,000 to 40,000 $h^{-1}$, preferably from 2,000 to 20,000 $h^{-1}$.

Further, the reaction system is not restricted to a particular one as long as it does not impair the objects of the present invention, and the reaction may be carried out on a fixed bed or a fluidized bed.

As have been described hereinabove, the process according to the present invention can produce the synthetic gases consisting of carbon monoxide and hydrogen at higher rates of selectivity and containing a lesser amount of by-products. Further, in this process, the catalytic activity of the catalyst can be maintained at a high level and the life of the catalyst can be kept for a longer period of time so that the reaction can be carried out without exchanging reaction systems for a long period of time. Hence, the process according to the present invention can produce the synthetic gases at cheaper costs and with higher efficiency, without causing little pollution.

The present invention will be described more in detail by way of examples.

Example 1:

(A) Two hundred (200) grams of zirconium hydroxide was calcined at 500 °C over the period of 1 hour, and the resulting zirconium oxide was employed as a carrier for the catalyst. A hundred (100) grams of the carrier was mixed with 300 ml of a solution of 1.1 grams of ruthenium chloride in water. The mixture was then subjected to wet kneading at 80 °C until water was allowed to evaporate to a full extent. The kneaded product was then dried at 120 °C over the period of 6 hours, and the catalyst was prepared by calcining the dry kneaded product at 500°C for 1 hour.

The resulting catalyst was found to contain ruthenium in the concentration of 0.5% by weight with respect to the weight of zirconium oxide.

The resulting catalyst (1.3 grams) was granulated through #16 to #32 mesh and filled in a quartz reactor, followed by reducing the catalyst with hydrogen at 500°C over the period of 1 hour.

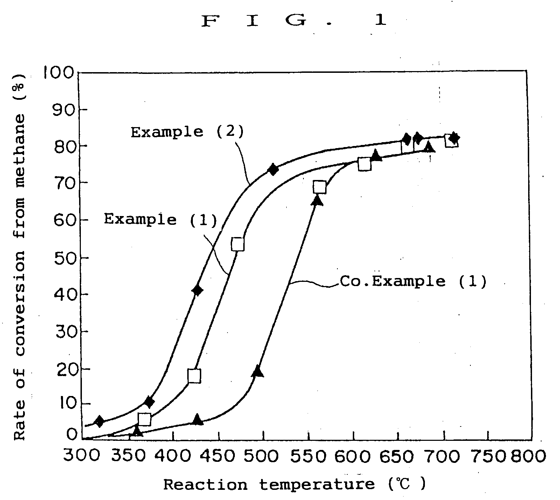

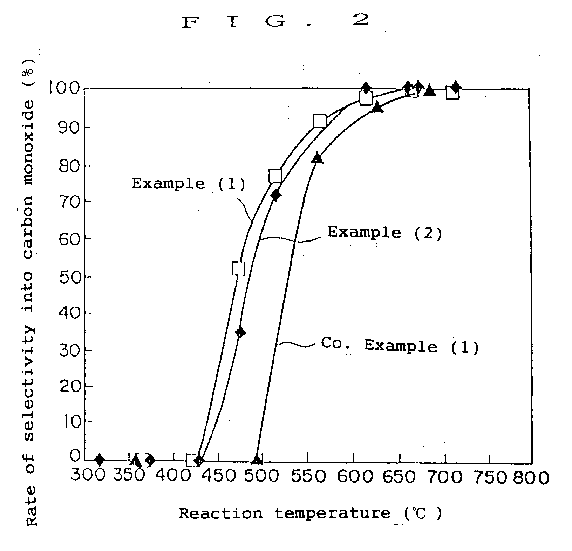

Thereafter, the catalyst was employed for the preparation of synthetic gases at the temperatures as shown in Figs. 1 and 2 under reaction conditions, as will be described hereinafter.

| | |
|---|---|
| Reaction pressure: | atmospheric pressure |
| Reaction temperature: | 300 °C - 730 °C. |
| Kind of raw gases: | methane gas, air and nitrogen gas |
| Composition of the gases: | methane : oxygen : nitrogen = 2 : 1 : 50 (molal ratio) |
| GHSV of raw gases: | 16,000 $h^{-1}$ |

The resulting synthetic gases were analyzed with gas chromatography, as well as the rate of conversion from methane and the rate of selectivity into carbon monoxide were evaluated at each of the reaction temperatures tested.

It is noted herein that the rate of selectivity into carbon monoxide was computed on' the basis of the following formula:

Rate of Selectivity into CO (%) =
Amount of CO Produced (% in volume)/{Amount of CO Produced (% in volume) + Amount of $CO_2$ (% in volume)} x 100

The results are shown in Figs. 1 and 2.

It is found as a result that the catalyst has maintained its catalytic activity when it has been employed at 730 °C for 50 hours and that no precipitation of carbon was recognized on the catalyst when observed upon removal from the reaction system after the completion of the reaction.

(B) The synthetic gases were prepared in substantially the same manner as in Example 1(A), above, with the exception that the reaction was carried out under the reaction conditions as will be described hereinafter.

| | |
|---|---|
| Reaction pressure: | atmospheric pressue |
| Reaction temperature: | 680 °C and 750°C. |
| Kind of raw gases: | methane gas, oxygen gas and nitrogen gas |
| Composition of the gases: | methane : oxygen : nitrogen = 2 : 1 : 4 (molal ratio) |
| GHSV of raw gases: | 43,000 $h^{-1}$ |

The resulting synthetic gases were evaluated for the rate of conversion from methane and the rate of selectivity into carbon monoxide in the same manner as in Example 1(A). The results are shown in Table below.

Example 2:

(A) A catalyst was prepared in substantially the same manner as in Example 1(A), with the exception that 100 grams of the carrier was mixed with 300 ml of a solution of 1.1 grams of ruthenium chloride and 4.7 grams of cobalt nitrate (hexahydrate) in water. It was found that the catalyst contained ruthenium in the concentration of 0.5% by weight and cobalt in the concentration of 1.0% by weight, with respect to the weight of zirconium oxide.

The synthetic gases were prepared by reacting the raw materials with the aid of the catalyst in substantially the same manner as in Example 1 at the temperatures as shown in Figs. 1 and 2. The resulting synthetic gases were evaluated in the same manner as in Example 1. The results are shown in Figs. 1 and 2.

(B) The synthetic gases were prepared under the same reaction conditions as in Example 1(B) in substantially the same manner as in Example 2(A). The resulting synthetic gases were evaluated in the same manner as in Example 1. The results are shown in Table below.

Comparative Example 1:

(A) A catalyst was prepared in substantially the same manner as in Example 1, with the exception that $\gamma$ -alumina was employed as a carrier in place of the zirconium carrier and 100 grams of the alumina was mixed with 30 ml of a solution of 1.1 grams of ruthenium chloride in ethanol. It was found that the resulting catalyst contained ruthenium in the concentration of 0.5% by weight with respect to the weight of $\gamma$ - alumina.

The synthetic gases were prepared using the resulting catalyst in substantially the same manner as in Example 1 at the temperatures as shown in Figs. 1 and 2. The resulting synthetic gases were evaluated in the same manner as in Example 1. The results are shown in Figs. 1 and 2.

(B) The synthetic gases were prepared under the same reaction conditions as in Example 1(B) in substantially the same manner as in Comparative Example 1(A). The resulting synthetic gases were evaluated in the same manner as in Example 1. The results are shown in Table below.

Evaluation of the results as shown in Figs. 1 and 2:

Fig. 1 shows that the catalyst used in Example 2 demonstrates its catalytic activity at the temperatures lower by 100°C or more than that used in Comparative Example 1. Likewise, it is shown that the catalyst used in Example 1 demonstrates its catalytic activity at the temperatures lower by approximately 70°C than that used in Comparative Example 1.

Fig. 2 shows that the catalysts used in Examples 1 and 2 exhibit the rate of selectivity into carbon monoxide equal to each other and higher than that used in Comparative Example 1. Further, it is found that the temperatures at which the rate of selectivity into carbon monoxide reaches 100% in Examples 1 and 2 as well as in Comparative Example 1 are 680 °C, 630 °C and 700°C , respectively, so that the catalysts used in Examples 1 and 2 can exhibit the higher rate of selectivity into carbon monoxide at lower temperatures than that used in Comparative Example 1.

Example 3:

A catalyst was prepared in substantially the same manner as in Example 2 from 5.2 grams of magnesium nitrate (hexahydrate), which in turn was employed in place of 4.7 grams of cobalt nitrate (hexahydrate). It was found that the resulting catalyst contained ruthenium in the concentration of 0.5% by weight and magnesium in the concentration of 1.0% by weight with respect to the weight of zirconium oxide.

The resulting catalyst was granulated through #16 to #32 mesh and 1.0 gram of the catalyst having equal particle sizes was filled in a quartz reactor, followed by reducing the catalyst with hydrogen at 500 °C over the period of 1 hour.

Thereafter, the catalyst was employed for the preparation of synthetic gases under reaction conditions, as will be described hereinafter.

Reaction pressure:                  atmospheric pressure

| Reaction temperature: | 680 °C and 750°C . |
| Kind of raw gases: | methane gas, oxygen gas and nitrogen gas |
| Composition of the gases: | methane : oxygen : nitrogen = 2 : 1 : 4 (molal ratio) |
| GHSV of raw gases: | 43,000 $h^{-1}$ |

The resulting synthetic gases were evaluated for the rate of conversion from methane and the rate of selectivity into carbon monoxide in the same manner as in Example 1 at each of the temperatures tested. The results are shown in Table below.

Example 4:

A catalyst was prepared in substantially the same manner as in Example 1 with the exception that 1.3 grams of rhodium chloride was employed in place of 1.1 grams of ruthenium chloride (hexahydrate). It was found that the resulting catalyst contained rhodium in the concentration of 0.5% by weight with respect to the weight of zirconium oxide.

The synthetic gases were prepared using the resulting catalyst in substantially the same manner as in Example 3, and they were evaluated in the same manner as in Example 3. The evaluation results are shown in Table below.

Example 5:

A catalyst was prepared in substantially the same manner in Example 4 with the exception that 100 grams of the carrier was mixed with 30 ml of a mixture of a solution of 1.3 grams of rhodium chloride in water with a solution of 4.7 grams of cobalt nitrate (hexahydrate) in water. It was found that the resulting catalyst contained rhodium in the concentration of 0.5% by weight and cobalt in the concentration of 1.0% by weight, with respect to the weight of zirconium oxide.

The synthetic gases were prepared using the resulting catalyst in substantially the same manner as in Example 3, and they were evaluated in the same manner as in Example 3. The evaluation results are shown in Table below.

Example 6:

A catalyst was prepared in substantially the same manner as in Example 5, with the exception that 5.2 grams of magnesium nitrate (hexahydrate) was employed in place of 4.7 grams of cobalt nitrate (hexahydrate). It was found that the resulting catalyst contained rhodium in the concentration of 0.5% by weight and magnesium in the concentration of 1.0% by weight, with respect to the weight of zirconium oxide.

The synthetic gases were prepared using the resulting catalyst in substantially the same manner as in Example 3, and they were evaluated in the same manner as in Example 3. The evaluation results are shown in Table below.

Comparative Example 2:

A catalyst was prepared in substantially the same manner as in Comparative Example 1, with the exception that 1.3 grams of rhodium chloride was employed in place of ruthenium chloride.

The synthetic gases were prepared, using the resulting catalyst in substantially the same manner as in Example 3, and they were evaluated in the same manner as in Example 3. The evaluation results are shown in Table below.

Example 7:

A catalyst was prepared by mixing 100 grams of stabilized zirconia powder of a cubic crystal system, containing 8 moles of yttrium oxide ($Y_2O_3$), with 300 ml of a solution of 1.1 grams of ruthenium chloride in water, followed by subjecting the mixture to wet kneading at 80 °C until the water contained in the mixture was allowed to evaporate to a full extent. Thereafter, the resulting kneaded product was dried at 120°C over the period of 6 hours and then calcined at 500°C over the period of 1 hour.

The synthetic gases were prepared using the resulting catalyst in substantially the same manner as in Example 3, and they were evaluated in the same manner as in Example 3. The evaluation results are shown in Table below.

Consideration of the results of Table below:

From the results as shown in the Table below, it is readily understood that the catalysts used in Examples 1 to 7 exhibit the rate of conversion from methane at the same temperature higher by 10% or more than those used in Comparative Examples 1 and 2. On the other hand, the catalysts used in Examples 1 to 7 exhibit the rate of selectivity into carbon monoxide at the same temperature higher by 8% or more than those used in Comparative Examples 1 and 2.

T A B L E

| | Example 1 Ru/ZrO$_2$ | | Example 2 Ru-Co/ZrO$_2$ | | Example 3 Ru-Mn/ZrO$_2$ | | Example 4 Rh/ZrO$_2$ | | Example 5 Rh-Co/ZrO$_2$ | |
|---|---|---|---|---|---|---|---|---|---|---|
| Reaction Temperature (°C) | 680 | 750 | 680 | 750 | 680 | 750 | 680 | 750 | 680 | 750 |
| Rate of Conversion from Methane (%) | 71.6 | 85.2 | 75.5 | 87.2 | 72.5 | 86.6 | 68.6 | 83.1 | 74.8 | 85.5 |
| Rate of Selectivity into CO (%) | 83.5 | 94.5 | 84.1 | 94.6 | 83.7 | 94.5 | 81.9 | 93.0 | 81.8 | 92.4 |

(To Be Cont'd)

10

T A B L E (Cont'd)

| | Example 6 Rh-Mn/$ZrO_2$ | | Example 7 Ru/yttrium stabilized zirconia | | Comparative Example 1 Ru/$Al_2O_3$ | | Comparative Example 2 Rh/$Al_2O_3$ | |
|---|---|---|---|---|---|---|---|---|
| Reaction Temperature (°C) | 680 | 750 | 680 | 750 | 680 | 750 | 680 | 750 |
| Rate of Conversion from Methane (%) | 73.8 | 85.8 | 74.4 | 85.6 | 58.6 | 73.2 | 56.7 | 71.1 |
| Rate of Selectivity into CO (%) | 81.6 | 92.9 | 82.3 | 93.3 | 73.3 | 84.3 | 72.4 | 82.5 |

## Claims

1. A process for the preparation of synthetic gases, wherein the synthetic gases are prepared by reacting gases to be employed as a raw material, containing methane and oxygen, in the presence of a catalyst in which at least one active ingredient selected from the group consisting of ruthenium and rhodium is deposited on at least one carrier selected from the group consisting of zirconia and stabilized zirconia.

2. A process for the preparation of synthetic gases as claimed in claim 1, wherein said, carrier is at least one member selected from the group consisting essentially of zirconia and stabilized zirconia.

3. A process for the preparation of synthetic gases as claimed in claim 1, wherein said catalyst further comprises at least a promoter selected from the group consisting of cobalt and magnesium.

4. A process for the preparation of synthetic gases as claimed in claim 1, wherein the active ingredient is deposited on the carrier at a rate ranging from 0.05% to 3.0% by weight with respect to the weight of the carrier.

5. A process for the preparation of synthetic gases as claimed in claim 1, wherein the active ingredient is deposited on the carrier at a rate ranging from 0.1% to 2.0% by weight with respect to the weight of the carrier.

6. A process for the preparation of synthetic gases as claimed in claim 3, wherein the promoter is deposited on the carrier at a rate ranging from 0.1% to 10.0% by weight with respect to the weight of the carrier.

7. A process for the preparation of synthetic gases as claimed in claim 3, wherein the promoter is deposited on the carrier at a rate ranging from 0.5% to 5.0% by weight with respect to the weight of the carrier.

8. A process for the preparation of synthetic gases as claimed in claim 1, wherein a molal ratio of methane to oxygen within the raw material is from 1.3 to 2.2.

9. A process for the preparation of synthetic gases as claimed in claim 1, wherein a molal ratio of methane to oxygen within the raw material is from 1.5 to 2.0.

10. A process for the preparation of synthetic gases as claimed in claim 1, wherein the synthetic gases are prepared at a reaction pressure of 300 kg/cm$^2$G or lower and at a temperature of 350 °C to 1,200 °C .

11. A process for the preparation of synthetic gases as claimed in claim 1, wherein the synthetic gases ate prepared at a reaction pressure of 50 kg/cm$^2$G or lower and at a temperature of 450 °C to 900 °C .

F I G . 1

F I G . 2

## DOCUMENTS CONSIDERED TO BE RELEVANT

EP 92121013.4

| Category | Citation of document with indication, where appropriate, of relevant passages | Relevant to claim | CLASSIFICATION OF THE APPLICATION (Int. Cl.5) |
|---|---|---|---|
| Y | GB - A - 2 239 406 (GAS RESEARCH INSTITUTE) * Page 6, 1st paragraph; tables 3-10 * | 1-11 | C 01 B 3/40 |
| Y | EP - A - 0 406 896 (IDEMITSU KOSAN) * Claims; page 3, line 15 - page 10, line 24; pages 11, 14,15 * | 1-11 | |
| A | EP - A - 0 333 037 (IGARASHI) * Page 3, line 16 - page 7, line 6; claims * | 1-7 | |
| D,A | NATURE, vol. 344, March 22, 1990 A.T. ASHCROFT et al. "Selective oxidation of methane to synthesis gas using transition metal catalysts" pages 319-321 * Page 321, left column, lines 44-45 * | 1,8-11 | TECHNICAL FIELDS SEARCHED (Int. Cl.5) C 01 B 3/00 |

The present search report has been drawn up for all claims

| Place of search | Date of completion of the search | Examiner |
|---|---|---|
| VIENNA | 26-02-1993 | KÖRBER |

EPO FORM 1503 03.82 (P0401)